# EUROPEAN PATENT SPECIFICATION

(11) **EP 2 103 459 B1**
(45) Date of publication and mention of the grant of the patent: **17.11.2010**
(21) Application number: 09290183.4
(22) Date of filing: 13.03.2009
(51) Int. Cl.: B60H 1/00, F16C 1/14

(54) **Cable connecting apparatus of controller for air conditioner in vehicle**
Kabelverbindungsvorrichtung einer Steuerung für Klimaanlagen in Fahrzeugen
Appareil de connexion de câbles de commande pour climatiseur dans un véhicule

(30) Priority: 17.03.2008 KR 20080024433; 17.03.2008 KR 20080024435; 11.06.2008 KR 20080054791; 20.08.2008 KR 20080081437
(43) Date of publication of application: 23.09.2009
(73) Proprietor: Halla Climate Control Corporation, Daejeon-si 306-230 (KR)
(72) Inventor: Lee, Jeongyeop, Daejeon-si 306-230 (KR); Kim, Yeongkil, Daejeon-si 306-230 (KR)
(74) Representative: Hirsch & Associés

(56) References cited:
- DE-A1- 2 405 321
- DE-A1- 10 062 533
- GB-A- 2 092 696

## Description

### BACKGROUND OF THE INVENTION

### Field of the Invention

The present invention relates to a cable connecting apparatus of a controller for an air conditioner in a vehicle, and more particularly, to a cable connecting apparatus of a controller for an air conditioner in a vehicle, which can connect a cable to actuating means of the controller and actuating means of an air-conditioning case to actuate a door, wherein the cable connecting apparatus includes bending preventing means mounted thereon for connecting an end portion of the cable with the actuating means, thereby enhancing durability and a manipulation feeling, minimizing abrasion of components, using the cable as a flexible cable without any restriction in route of the cable and without bending of the cable, and reducing a manufacturing cost since the connecting apparatuses respectively mounted on the air-conditioning case and on the controller have the same structure.

### Background Art

In general, an air conditioner for vehicles is a car interior component, which is installed in the vehicle heat for the purpose of cooling the inside of the vehicle in the summer season or the winter season or removing frost from a windshield in rainy season or winter season to thereby secure a driver's front and rear visual field. Since such an air conditioner typically includes a heating device and a cooling device together, so that it heats, cools or ventilates the inside of the vehicle through the steps of selectively introducing the indoor air or the outdoor air to the air conditioner through a blower unit, heating or cooling the introduced air, and blowing the heated or cooled air into the vehicle.

Such an air conditioner is classified into a three-piece type where a blower unit, an evaporator unit, and a heater core unit are disposed independently, a semi-center type where the evaporator unit and the heater core unit are embedded in an air-conditioning case and the blower unit is mounted separately, and a center-mounting type where the three units are all embedded in the air-conditioning case.

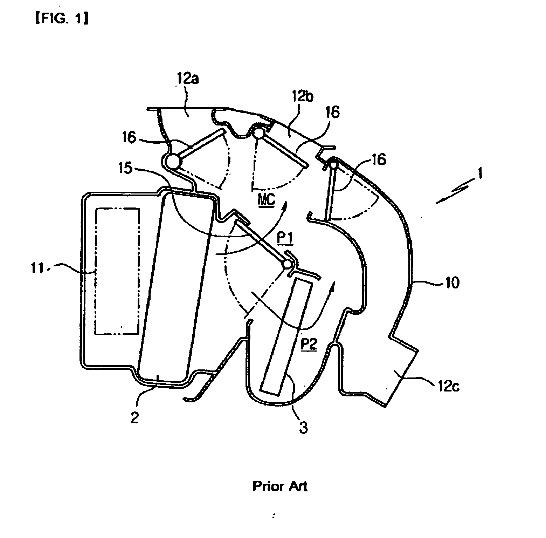

FIG. 1 illustrates the semi-center type air conditioner. In FIG. 1, the air conditioner 1 includes: an air-conditioning case 10 having an air inflow port 11 formed on an inlet thereof and a defrost vent 12a, a face vent 12b and a floor vent 12c mounted on an outlet thereof in such a way as to be adjusted in a degree of opening by mode doors 16; an evaporator 2 and a heater core 3 embedded in the air-conditioning case 10; and a temperature-adjusting door 15 mounted between the evaporator 2 and the heater core 3 for adjusting a degree of opening of a cold air passageway P1 bypassing the heater core 3 and a warm air passageway P2 passing through the heater core 3.

Furthermore, the air-conditioning case 10 further includes a blower (not shown) mounted on the air inflow port 11 thereof for selectively introducing and sending inside air or outside air into the air-conditioning case 10 through an inside and outside air inlet (not shown) adjusted in a degree of opening by inside and outside air converting door (not shown).

According to the air-conditioner 1 for the vehicle configured as described above, in case of the greatest cooling mode, the temperature-adjusting door 15 opens the cold air passageway P1 and closes the warm air passageway P2. Accordingly, the air blown by the blower (not shown) is converted into cold air by being heat-exchanged with refrigerant flowing inside the evaporator 2 while passing through the evaporator 2, and then, flows toward a mixing chamber (MC) through the cold air passageway P1. After that, the converted air is discharged to the inside of a vehicle through the vents 12a to 12c opened by the mode doors 16 according to a predetermined air-conditioning mode, whereby the inside of the vehicle is cooled.

Moreover, in case of the greatest heating mode, the temperature-adjusting door 15 closes the cold air passageway P1 and opens the warm air passageway P2. Accordingly, the air blown by the blower (not shown) passes through the evaporator 2, is converted into warm air by being heat-exchanged with cooling water flowing inside the heater core 3 while passing through the heater core 3 through the warm air passageway P2, and then, flows toward the mixing chamber (MC). After that, the converted air is discharged to the inside of a vehicle through the vents 12a to 12c opened by the mode doors 16 according to the predetermined air-conditioning mode, whereby the inside of the vehicle is heated.

In the meantime, in case of not the greatest cooling mode but a half cooling mode, the temperature-adjusting door 15 is rotated to a neutral position, and opens the cold air passageway P1 and the warm air passageway P2 relative to the mixing chamber (MC). Accordingly, the cold air passing through the evaporator 2 and the warm air passing through the heater core 3 flow toward the mixing chamber (MC) and are mixed with each other, and then, are discharged to the inside of the vehicle through the vents 12a to 12c opened by the mode doors 16 according to the air-conditioning mode.

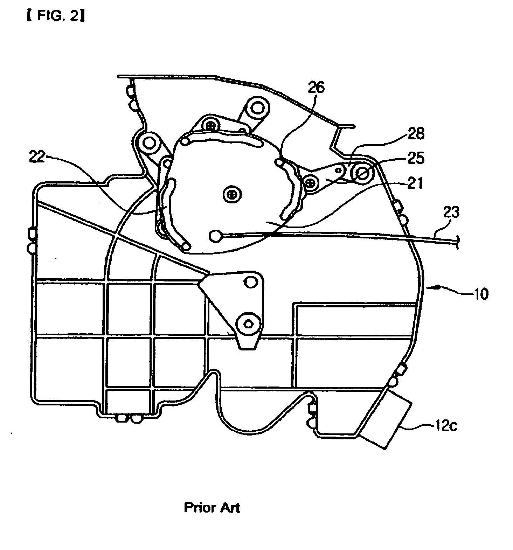

Additionally, the inside and outside air converting door (not shown), the temperature-adjusting door 15 and the mode doors 16 are respectively adjusted in their degree of opening by arms 28, levers 25 and a cam 21 mounted on an outer face of the air-conditioning case 10, and it will be described referring to FIG. 2.

FIG. 2 illustrates a state that the arms 28, the levers 25 arid the cam 21 for actuate the doors 16 are mounted on the outer face of the air-conditioning case 10. In this instance, the cam 21, the levers 25 and the arms 28 are rotatably joined to the outer face of the air-conditioning case 10.

The cam 21 includes three slots 22, and the number of the slots 22 may be increased and decreased according to the number of the doors 16, which will be actuated.

The arms 28 are directly connected with rotary shafts of the doors 16 to transfer a rotational force to the doors 16.

Furthermore, the levers 25 are respectively located between the cam 21 and each of the arms 28, wherein one end portion of each of the levers 25 is slidably connected with the slot 22 through a pin 26 and the other end portion is rotatably connected with the arm 28, whereby the levers 25 can transfer the rotational force receiving from the cam 21 to the arms 28.

Moreover, the cam 21 is connected with switches 50a mounted on a controller 50 of the vehicle through a cable 23. Here, the controller 50 includes a housing 51 and a plurality of switches 50a of various forms, namely, an air volume switch (not shown) for adjusting a speed of an air blast, a mode switch 50a for determining a discharge direction of air, a temperature adjusting switch (not shown) for adjusting an air temperature, and an air conditioner switch (not shown) for turning on and off the air conditioner.

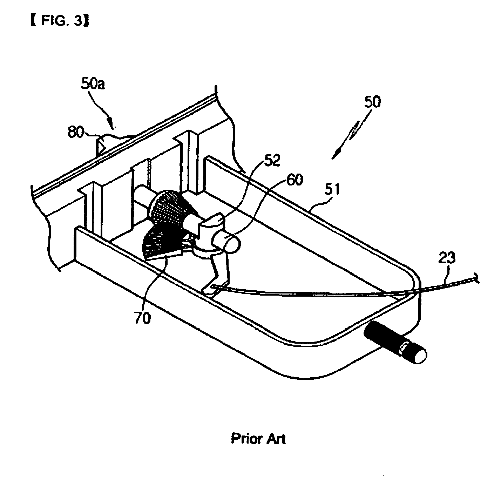

FIG. 3 is a perspective view showing one example of the switch mounted on the controller of the vehicle. In FIG. 3, the switch 50a includes: a gear shaft 60 having one end rotatably supported on a boss 52 formed from the inner bottom face of the housing 51; a gear lever 70 rotatably mounted on a circumference of the boss 52 in such a way as to be gear-coupled to the gear shaft 60 and connected with the cam 21 of the air-conditioning case 10 through the cable 23; and a knob 80 joined to an end portion of the gear shaft 60 projecting outwardly from the housing 51. The gear shaft 60 adopts a beveled tooth form and the gear lever 70 corresponding to the gear shaft 60 adopts an arced tooth form.

Accordingly, when a passenger rotates the knob 80 to operate the door, since the gear shaft 60 is rotated by the rotation of the knob 80 and the gear lever 70 gear-coupled with the gear shaft 60 is also rotated, the cable 23 connected with the gear lever 70 is moved back and forth. In this instance, when the cable 23 is moved back and forth, the cam 21 mounted on the air-conditioning case 10 is rotated. When the cam 21 is rotated, the lever 25 is rotated at a predetermined angle while a pin 26 of the lever 25 slides along the slot 22 of the cam 21, and then, the arm 28 interlocked with the lever 25 rotates the door 16 to a wanted position.

In the meantime, the arms 28 may be directly and slidably joined to the slots 22 of the cam 21 without mounting the levers 25.

Moreover, since the cable 23 has rigidity of a predetermined level or more, it can rotate the cam 21 mounted on the air-conditioning case 10 while moving back and forth when the gear lever 70 is rotated.

However, the above-mentioned prior art has a size beyond a predetermined diameter to have a predetermined rigidity in order to prevent that the cable cannot transfer power due to its transformation (bending) when the cable 23, which connects the switch 50a of the controller 50 and the cam 21 of the air-conditioning case 10 with each other, is pulled. In addition, the prior art has a problem in that it is restricted in route of the cable 23 due to rigidity of the cable 23.

Furthermore, the prior art has several problems in that it exerts influence on a manipulation force and a manipulation feeling of the switch 50a according to the route of the cable 23, and in that it is difficult to design the air conditioner 1 and the controller 50 in consideration of the route of the cable 23 since the cable may be interfered with other components.

Document DE 24 05 321, which is considered as the closest prior art, discloses, in order to solve the above-mentioned problems, a cable connecting apparatus of a controller for an air conditioner in a vehicle, which connects actuating means of the controller in the vehicle and actuating means of an air-conditioning case with a single cable to thereby actuate doors mounted inside the air-conditioning case, wherein the cable connecting apparatus comprises: a casing having a receiving portion formed therein in such a way that one end portion of the cable is inserted into the receiving portion at one side thereof; connecting means movably inserted into the receiving portion of the casing for connecting one end portion of the cable and the actuating means with each other; and bending preventing means disposed on the connecting means to prevent the cable inserted into the receiving portion from bending by the manipulation force so that the manipulation force can be transferred between the actuating means, wherein the connecting means is a pulley rotatably inserted and mounted into the receiving portion formed circularly inside the casing, and wherein one end portion of the cable is joined to the outer circumferential surface of the pulley in such a way as to be circumscribed with the pulley and the pulley comprises a rotary shaft formed on the center of one side thereof in such a way as to be joined with the actuating means.

### SUMMARY OF THE INVENTION

Accordingly, the present invention has been made to solve the above-mentioned problems occurring in the prior arts, and it is an object of the present invention to provide a cable connecting apparatus of a controller for an air conditioner in a vehicle, which can connect a cable to actuating means of the controller and actuating means of an air-conditioning case to actuate a door, wherein the cable connecting apparatus includes bending preventing means mounted thereon for connecting an end portion of the cable with the actuating means, thereby enhancing durability and a manipulation feeling, minimizing abrasion of components, using the cable as a flexible cable without any restriction in route of the cable and without bending of the cable, and reducing a manufacturing cost since the connecting apparatuses respectively mounted on the air-conditioning case and on the controller have the same structure.

To accomplish the above object, according to the present invention, there is provided a cable connecting apparatus of a controller for an air conditioner in a vehicle, according to the features of independent claim 1.

The cable connecting apparatus of the controller for the air conditioner in the vehicle according to the present invention, which can connect a cable to actuating means of the controller and actuating means of an air-conditioning case to actuate a door, includes bending preventing means mounted thereon for connecting an end portion of the cable with the actuating means, whereby the cable connecting apparatus can enhance durability and a manipulation feeling, minimize abrasion of components, use the cable as a flexible cable without any restriction in route of the cable and without bending of the cable, and reduce a manufacturing cost since a diameter of the cable can be reduced greatly.

Since there is no restriction in route of the cable, there is no need to consider the route of the cable when the air conditioner and the controller are designed, and hence, there is no restriction in design.

Furthermore, the present invention can reduce the manufacturing cost since the connecting means respectively mounted on the air-conditioning case and on the controller have the same structure.

Moreover, the cable connecting apparatus according to the present invention occupies a small assembly space since a case of the connecting means is formed in a round form.

Additionally, a pulley has a detent recess formed on one side thereof in such a way that a detent projection mounted inside the casing is elastically caught to the detent recess, and in this instance, the detent recess is formed left-right asymmetrically, namely, one of right and left sides of the detent recess has a curved face having a radius larger than that of the other side thereof or has an inclined face having an angle smaller than that of the other side thereof, whereby the present invention can provide the same manipulation feeling and force when the passenger rotates a knob in the direction to push the cable and in the direction to pull the cable to thereby enhance the manipulation feeling.

In addition, since a support guide made of an elastic material closely supports the cable while moving together with the cable drawn out from a tube, the present invention can use the cable as a flexible cable without any restriction in route of the cable and remove a loss of the cable while using the flexible cable by preventing that the cable is bent.

Furthermore, since a boss portion or a roller is formed at a portion, where a sliding groove and a receiving portion are connected with each other, the support guide takes a U-turn along the outer circumferential surface of the boss portion or the roller and closely supports the cable, whereby the support guide can be prevented from a tangle.

### BRIEF DESCRIPTION OF THE DRAWINGS

The above and other objects, features and advantages of the present invention will be apparent from the following detailed description of the preferred embodiments of the invention in conjunction with the accompanying drawings, in which:
FIG. 1 is a sectional view of an air conditioner in a vehicle according to a prior art;
FIG. 2 is a side view showing a stat where arms, levers and a cam are mounted on an outer face of an air-conditioning case to actuate a door in the air conditioner according to the prior art;
FIG. 3 is a perspective view showing one example of a switch mounted on a controller in the vehicle according to the prior art;
FIG. 4 is a side view showing a state where a cable connecting apparatus of a controller for an air conditioner in a vehicle according to a first preferred embodiment of the present invention is installed on an air-conditioning case;
FIG. 5 is a perspective view showing a state where the cable connecting apparatus according to the first preferred embodiment of the present invention is installed on the air-conditioning case and the controller;
FIG. 6 is a sectional view taken along the line of A-A of FIG. 5;
FIG. 7 is an exploded perspective view of the cable connecting apparatus according to the first preferred embodiment of the present invention;
FIGS. 8 and 9 are views showing a state where a pulley pulls or winds a cable in the cable connecting apparatus according to the first preferred embodiment of the present invention;
   FIG. 10 is a perspective view showing a state where a cable connecting apparatus of a controller for an air conditioner in a vehicle according to a second preferred embodiment of the present invention is installed on an air-conditioning case and a controller;
   FIG. 11 is a sectional view taken along the line of B-B of FIG. 10;
   FIG. 12 is an exploded perspective view of the cable connecting apparatus according to the second preferred embodiment of the present invention;
   FIGS. 13 and 14 are views showing a state where a pulley is rotated in a direction to push or pull a cable in the cable connecting apparatus according to the second preferred embodiment of the present invention;
   FIGS. 15 and 16 are views showing modifications of a detent recess in the cable connecting apparatus according to the second preferred embodiment of the present invention;
   FIG. 17 is a perspective view showing a state where a cable connecting apparatus of a controller for an air conditioner in a vehicle according to a third preferred embodiment of the present invention is installed on an air-conditioning case and a controller;
   FIG. 18 is a sectional view taken along the line of C-C of FIG. 17;
   FIG. 19 is an exploded perspective view of the cable connecting apparatus according to the third preferred embodiment of the present invention;
   FIGS. 20 and 21 are views showing a state where a pulley pulls or winds a cable in the cable connecting apparatus according to the third preferred embodiment of the present invention;
FIGS. 22 and 23 are views showing a state where a boss portion is substituted with a roller in the cable connecting apparatus according to the third preferred embodiment;
FIG. 24 is a perspective view showing a state where a cable connecting apparatus of a controller for an air conditioner in a vehicle according to a fourth preferred embodiment of the present invention is installed on an air-conditioning case and a controller;
FIG. 25 is an exploded perspective view of the cable connecting apparatus according to the fourth preferred embodiment of the present invention;
FIGS. 26 and 27 are views showing a state where a slide bar pushes and pulls the cable in the cable connecting apparatus according to the fourth preferred embodiment of the present invention; and
FIGS. 28 and 29 are views showing a state where a boss portion is substituted with a roller in the cable connecting apparatus according to the fourth preferred embodiment.

### DETAILED DESCRIPTION OF THE PREFERRED EMBODIMENT

Reference will be now made in detail to the preferred embodiment of the present invention with reference to the attached drawings.

The same parts as the prior art have the same reference numerals as the prior art.

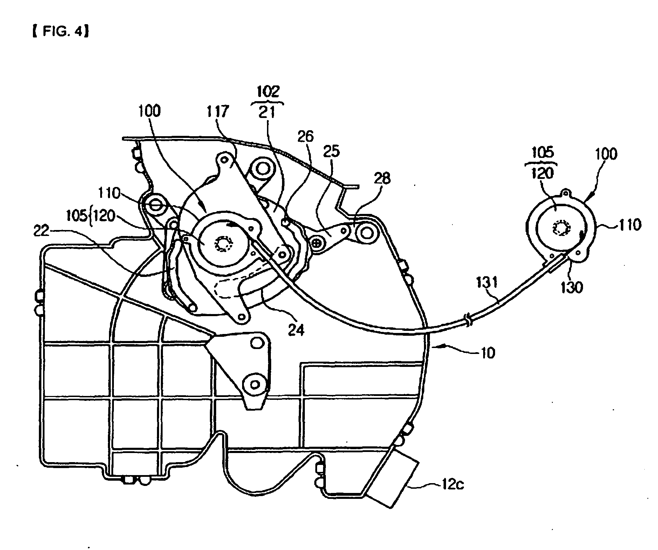

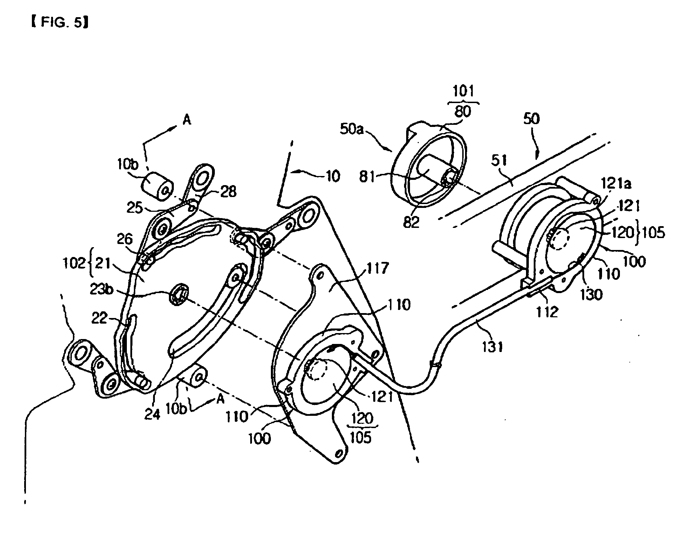

FIG. 4 is a side view showing a state where a cable connecting apparatus of a controller for an air conditioner in a vehicle according to a first preferred embodiment of the present invention is installed on an air-conditioning case, FIG. 5 is a perspective view showing a state where the cable connecting apparatus according to the first preferred embodiment of the present invention is installed on the air-conditioning case and the controller,

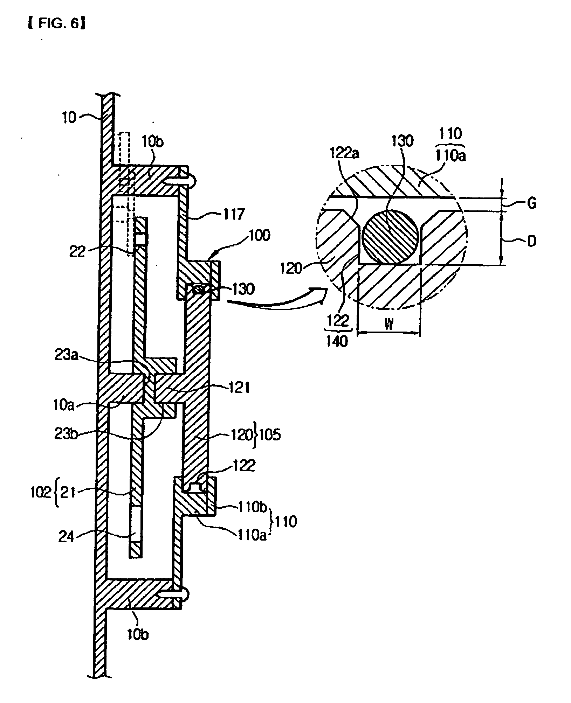

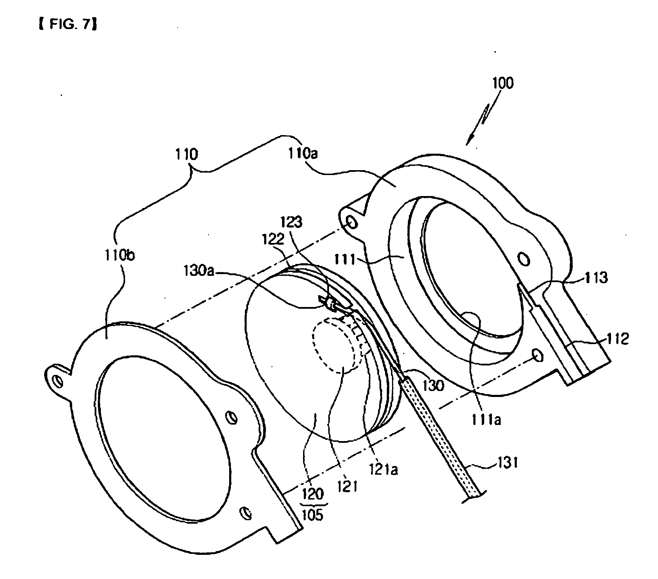

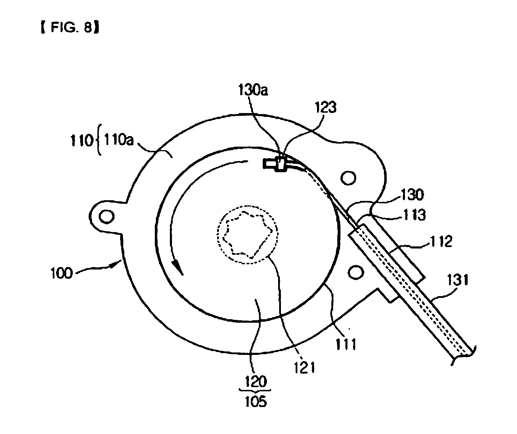

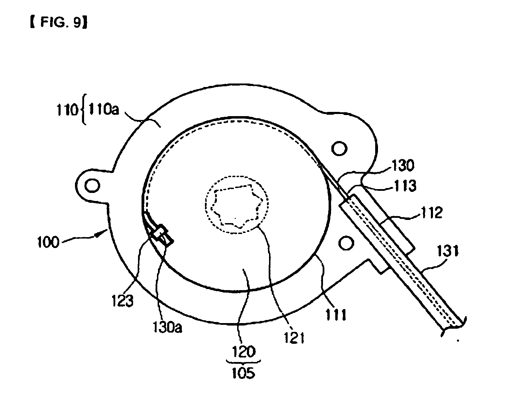

FIG. 6 is a sectional view taken along the line of A-A of FIG. 5, FIG. 7 is an exploded perspective view of the cable connecting apparatus according to the first preferred embodiment of the present invention, and FIGS. 8 and 9 are views showing a state where a pulley pulls or winds a cable in the cable connecting apparatus according to the first preferred embodiment of the present invention.

First, the cable connecting apparatus 100 of the controller for the air conditioner in the vehicle according to a first preferred embodiment of the present invention is applicable to various air conditioners of a center-mounting type, a semi-center type, a three-piece type, and so on.

Here, referring to FIG. 1, the air conditioner will be described in brief. The air conditioner includes: an air-conditioning case 10 having an air inflow port 11 formed on an inlet thereof, a plurality of vents 12a to 12c formed on an outlet thereof, and a cold air passageway P1 and a warm air passageway P2 formed on an inner air passageway thereof; an evaporator 2 and a heater core 3 mounted on the inner air passageway of the air-conditioning case 10; a temperature-adjusting door 15 mounted between the evaporator 2 and the heater core 3 for adjusting a degree of opening of a cold air passageway P1 bypassing the heater core 3 and a warm air passageway P2 passing through the heater core 3; and a plurality of mode doors 16 respectively mounted on the vents 12a to 12c for adjusting a degree of opening of the vents 12a to 12c.

Furthermore, the air-conditioning case 10 further includes a blower (not shown) mounted on the air inflow port 11 thereof for sending the inside air or the outside air.

In addition, a plurality of the vents 12a to 12c are a defrost vent 12a for discharging air toward the front window of the vehicle, a face vent 12b for discharging air toward the face of a passenger, who seats on the front seat, and a floor vent 12c for discharging air toward the passenger's feet.

In the meantime, the vents 12a to 12c are respectively connected with specific discharge holes formed inside the vehicle through ducts (not shown).

Furthermore, as shown in FIG. 4, the temperature-adjusting door 15 and the mode doors 16 are adjusted in a degree of opening by arms 28, levers 25 and a cam 21 mounted on an outer face of the air-conditioning case 10, and hereinafter, only a case that the mode doors 16 are controlled through the arms 28, the levers 25 and the cam 21 will be described. Of course, a control of the temperature-adjusting door 15 is the same as the mode doors 16.

The cam 21 is rotatably joined to the outer face of the air-conditioning case 10, and has three slots 22 formed on a circumference thereof. The number of the slots 22 may be increased and decreased according to the number of doors 16, which will be actuated.

In this instance, the air-conditioning case 10 includes a projection 10a formed on the outer face thereof, and the cam 21 includes an insertion hole 23a formed on one side thereof in such a way that the projection 10a is rotatably inserted and joined thereto. Moreover, the cam 21 further includes a joining hole 23b formed on the other side thereof in such a way that a rotary shaft 121 of a pulley 120 of connecting means 105, which will be described later, is joined thereto.

The arms 28 are mounted on the outer face of the air-conditioning case 10, and directly connected with rotary shafts of the doors 16 to thereby be rotated together with the doors 16.

In addition, the levers 25 are located between the cam 21 and each of the arms 28, and rotatably joined to the outer face of the air-conditioning case 10. Each of the levers 25 has one end portion slidably joined with each of the slots 22 and the other end portion rotatably joined with each of the arms 28 to thereby transfer a rotational force receiving from the cam 21 to the arms 28.

In the meantime, the arms 28 may be directly and slidably joined to the slots 22 of the cam 21 without mounting the levers 25.

Furthermore, a controller 50 is mounted on a center fascia panel of the vehicle in order to control the air conditioner. The controller 50 has a structure that a plurality of switches 50a are mounted on a housing 51 of a predetermined form. That is, an air volume switch (not shown) for adjusting a speed of an air blast, a mode switch 50a for determining a discharge direction of air, a temperature adjusting switch (not shown) for adjusting an air temperature, an air conditioner switch (not shown) for turning on and off the air conditioner, and so on may be mounted on the housing 51.

FIG. 5 illustrates an example that the mode switch 50a is mounted on the housing 51.

The switch 50a is constructed in such a way that a knob 80 is rotatably mounted on the front side of the housing 51 and the cable connecting apparatus 100 is installed on the rear side of the housing 51 to actuate a cable 130 when the knob 80 is rotated. That is, in the present invention, the cable connecting apparatus 100, which is mounted on one end portion of the cable 130, and the knob 80 constitute the switch 50a.

The knob 80 includes a joining portion 81, which will be joined with the rotary shaft 121 of the pulley 120 of the cable connecting apparatus 100.

In the meantime, the rotary shaft 121 of the pulley 120 may be directly joined to the joining portion 81 of the knob 80 or indirectly joined to the joining portion 81 of the knob 80 through a separate connector (not shown).

Moreover, the cable connecting apparatus 100 of the controller for the air conditioner according to the present invention is an apparatus for connecting end portions of the single cable 130 to actuating means 101 of the controller 50 and actuating means 102 of the air-conditioning case 10 to thereby actuate the doors 16 mounted inside the air-conditioning case 10.

While the actuating means 101 of the controller 50 is mounted on the controller 50 in such a way as to be interlocked with the switch 50a, the actuating means 102 of the air-conditioning case 10 is mounted on the outer face of the air-conditioning case 10 in such a way as to be interlocked with the doors 16 mounted inside the air-conditioning case 10.

Additionally, the cable 130 is mounted in such a way as to connect the actuating means 101 of the controller 50 and the actuating means 102 of the air-conditioning case 10 with each other, and is wrapped with a tube 131.

Here, it is preferable that the actuating means 101 of the controller 50 is the knob 80 of the switch 50a and the actuating means 102 of the air-conditioning case 10 is the cam 21, which is interlocked with the doors 16 mounted inside the air-conditioning case 10. Of course, the actuating means 102 of the air-conditioning case 10 may be the arms 28 or the levers 25 interlocked with the doors 16.

Furthermore, it is preferable that the cable 130 is a flexible cable 130, which can be freely curved or bent. Accordingly, there is no restriction in route of the cable 130 and in design of the air conditioner 1 and the controller 50 since there is no need to design the air conditioner 1 and the controller 50 in consideration of the route of the cable 130.

Moreover, the cable 130 is mounted in such a way as to slide along the inside of the tube 131, and can be decreased in quantity since only one strand of the cable 130 is used.

The cable connecting apparatus 100 includes: a casing 110 having a receiving portion 111 formed therein in such a way that one end portion of the cable 130 is inserted into the receiving portion 111 at one side thereof; connecting means 105 movable inserted into the receiving portion 111 of the casing 110 for connecting the end portion of the cable 130 and the actuating means 101 and 102 with each other; and bending preventing means 140 disposed on the connecting means 105 for preventing bending of the cable 130 inserted into the receiving portion 111.

The connecting means 105 is the pulley 120 rotatably inserted and mounted into the receiving portion 111 formed circularly inside the casing 110. The end portion of the cable 130 is joined to the outer circumferential surface of the pulley 120 in such a way as to be circumscribed with the pulley 120, and the pulley 120 has the rotary shaft 121 formed on the center of one side thereof in such a way as to be joined with the actuating means 101 and 102.

The casing 110 includes: a first casing 110a having the receiving portion 111; and a second casing 110b joined with the first casing 110a for covering the receiving portion 111. Accordingly, when the second casing 110b is joined with the first casing 110a in a state where the pulley 120 is received in the receiving portion 111 of the first casing 110a, the pulley 120 is not separated from the cable connecting apparatus 100.

In addition, the first casing 110a and the second casing 110b may be joined with each other via a bolt (not shown), or via a retaining jaw (not shown) formed on the outer circumferential face of the first casing 110a and an elastically joined portion (not shown) formed on the outer circumferential face of the second casing 110b in such a way as to be elastically joined to the retaining jaw (not shown).

Furthermore, the receiving portion 111 is in a round form, and includes a retaining portion 111a formed on one side thereof for preventing a separation of the pulley 120 inserted into the receiving portion 111.

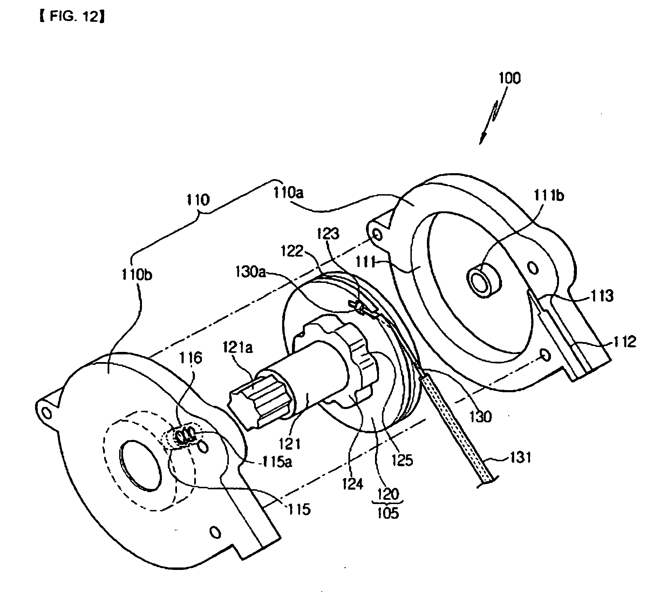

The casing 110 having the receiving portion 11 may be constructed of one of various forms, such as a structure shown in FIG. 7 or a structure shown in FIG. 12. The structure of the casing 110 shown in FIG. 7 is described above, and the structure of the casing 110 shown in FIG. 12 will be described now. Referring to FIG. 12, the first casing 110a has a central shaft 111b protrudingly formed at the center of the receiving portion 111, and the pulley 120 has a joining hole 126 formed at the center of one side thereof correspondingly to the central shaft 111b in such a way as to be rotatably joined to the central shaft 111b. Accordingly, the pulley 120 can be rotated smoothly since it is supported by the central shaft 111b inside the receiving portion 111.

In the meantime, the above-mentioned structure of the casing 110 is only one example, and the structure of the casing 110 may be modified in various ways. That is, the receiving portion 111 may be formed in the second casing 110b, and a mounting direction of the rotary shaft 121 of the pulley 120 to insert the pulley 120 into the receiving portion 111 of the casing 110 may be varied in various ways.

Moreover, a tube joining portion 112 is formed on one side of the casing 110, to which one end portion of the cable 130 is inserted, in such a way that one end portion of the tube 131 wrapping the cable 130 can be fixed thereto.

In addition, a cable support groove 113 is formed between the tube joining portion 112 and the receiving portion 111 for supporting a portion of the cable 130 drawn out from the tube 131. The cable support groove 113 supports the cable 130 located between the tube 131 and the pulley 120.

In the meantime, the casing 110 is in the round form to thereby reduce an assembly space.

Additionally, since the cable 130 is circumscribed with the outer circumferential surface of the pulley 120, it makes easy to transfer power of the cable 130 and minimizes abrasion between the casing 110 and the pulley 120. Here, the cable 130 is mounted in a tangential direction on the outer circumferential surface of the pulley 120.

Furthermore, the bending preventing means 140 is constructed of a cable groove 122 with a non-circular section and the cable 130 with a circular section to minimize a contact resistance to the cable 130 when the cable 130 is wound on the outer circumferential surface of the pulley 120.

That is, the cable groove 122 with a non-circular section supports the cable 130 in such a way as to guarantee a smooth winding of the cable 130 and prevent bending of the cable 130 when the cable is wound or released. Particularly, during a process that the cable 130 is wound on or released from the cable groove 122 with a non-circular section, when a compression force is applied to the cable 130, the cable groove 122 prevents bending of the cable 130 with a circular section, namely, a loss of the cable.

Moreover, the rotary shaft 121 protrudingly formed from the center of the one side of the pulley 120 is formed in such a way as to protrude outwardly from the casing 110.

Additionally, the rotary shaft 121 has a convex portion 121a formed on the outer circumferential surface thereof to prevent a sliding when it is joined with the actuating means 101 and 102. In this instance, the knob 80, which is the actuating means 101 of the controller, has a concave portion 82 formed on the inner circumferential surface of the joining portion 81 in such a way as to be joined with the convex portion 121a of the rotary shaft 121, and also the cam 21, which is the actuating means 102 of the air-conditioning case, has a concave portion 23b formed on one side thereof in such a way as to be joined with the convex portion 121a of the rotary shaft 121.

In addition, the cable 130 is formed circularly in a cross section, and in this instance, it is preferable that the cable groove 122 is formed in a rectangular shape. Accordingly, since the cable 130 and the cable groove 122 are in a dot contact with each other, a contact resistance between the cable 130 and the cable groove 122 is minimized, durability is enhanced, and a manipulation feeling of the knob 80 is also enhanced when the passenger manipulates the knob 80 of the controller 50.

Furthermore, a gap (G) of a predetermined interval is formed between the inner circumferential surface of the receiving portion 111 of the casing 110 and the outer circumferential surface of the pulley 120. That is, since the one side of the cable 130 is supported by the inner circumferential surface of the receiving portion 111 when the cable 130 is wound on or released from the cable groove 122 of the pulley 120, if the gap (G) formed between the inner circumferential surface of the receiving portion 111 and the outer circumferential surface of the pulley 120 is adjusted, it can minimize a friction force between the cable 130 and the receiving portion 111, secure a good manipulation feeling, and remove the loss of the cable.

In this instance, it is preferable that a depth (D) of the cable groove 122 is the same as a diameter size of the cable 130 and a width (W) of the cable groove 122 is larger than the diameter of the cable 130.

In the meantime, the gap (G) formed between the inner circumferential surface of the receiving portion 111 and the outer circumferential surface of the pulley 120 is properly adjusted within a range that the loss of the cable does not occur.

As described above, when the gap around the cable 130 is adjusted, the loss of the cable occurring when the cable 130 is bent can be removed while the cable 130 is wound on or released from the cable groove 122 of the pulley 120.

Moreover, the cable groove 122 includes chamfered portions 122a formed at both sides of an opening portion thereof to thereby allow a smooth entry of the cable 130.

In the meantime, the pulley 120 has a fixing slot 123 communicating with the cable groove 122 in such a way that a fixing cap 130a joined to an end portion of the cable 130 is inserted and fixed thereto.

Additionally, in case of the cable connecting apparatus 100 installed on the air-conditioning case 10, it is preferable that the casing 110 further includes brackets 117 in such a way as to be fixed and joined to the outer face of the air-conditioning case 10 and the rotary shaft 121 of the pulley 120 is located at the rotational center of the cam 21, which is the actuating means 102 of the air-conditioning case 10.

In this instance, the air-conditioning case 10 further includes a plurality of boss portions 10b of a predetermined height formed on the outer face thereof in such a way that the brackets 117 can be joined thereto via bolts. Here, the cam 21 further includes slots 24 for preventing interference with the boss portions 10b, and the slots 24 are larger than a radius of working of the cam 21.

In addition, in case of the cable connecting apparatus 100 installed on the controller 50, it is preferable that the casing 110 is fixed to the rear side of the housing 51 of the controller 50 and the rotary shaft 121 of the pulley 120 is located at the rotational center of the knob 80, which is the actuating means 101 of the controller 50.

As described above, when the switch 50a of the controller 50 and the cam 21 of the air-conditioning case 10 are connected with each other via the cable 130, the cable connecting apparatuses 100 are respectively installed at both end portions of the cable 130.

Accordingly, when the cable 130 drawn out from the tube 131 is wound on or released from the outer circumferential surface of the pulley 120, the cable 130 is in a point contact state inside the rectangular cable groove 122 formed on the outer circumferential surface of the pulley 120, and at the same time, the receiving portion 111 of the casing 110 wrapping the pulley 120 supports one side of the cable 130, so that the cable 130 is used as the flexible cable 130 without any restriction in route of the cable 130 and it is prevented that the cable 130 is bent when the cable 130 is wound (pulled) or released (pushed) on the pulley 120, whereby the loss of the flexible cable 130 can be removed.

Furthermore, since the cable 130 is in point contact with the cable groove 122 of the pulley 120 to thereby minimize a contact resistance, it enhances durability and a manipulation feeling of the switch 5a of the controller 50.

Moreover, since the cable connecting apparatuses installed on the air-conditioning case 10 and the controller 50 have the same structure, a manufacturing cost can be reduced.

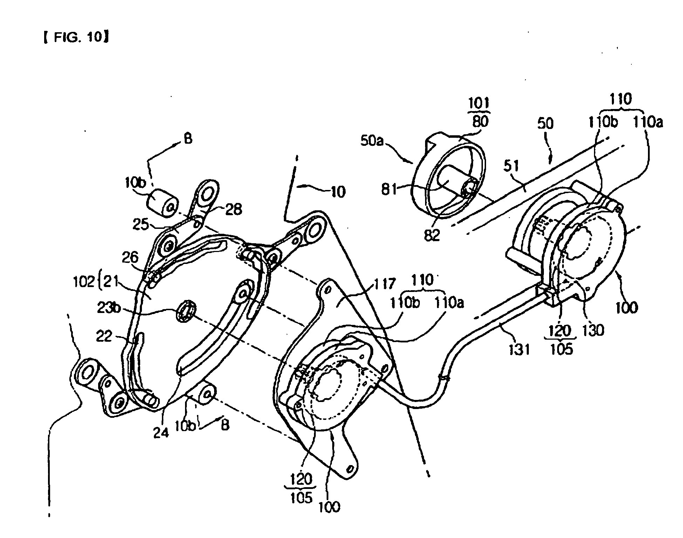

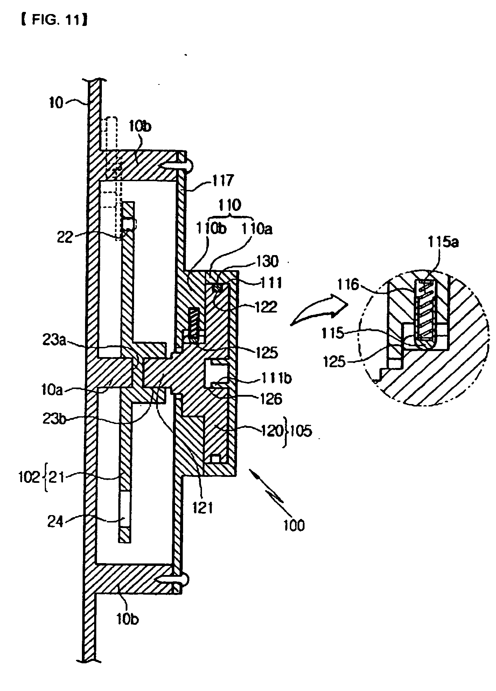

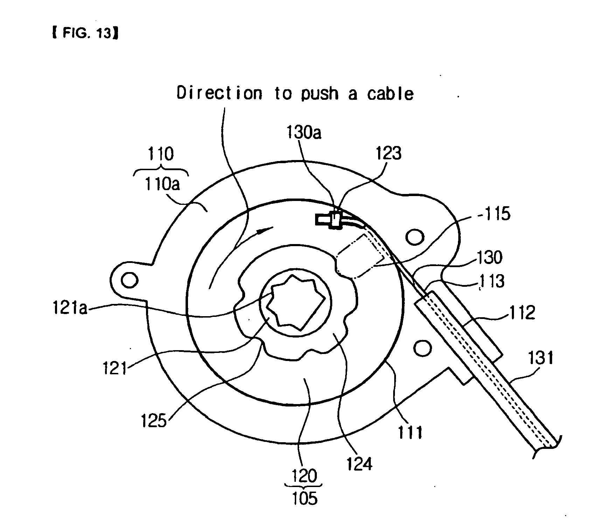

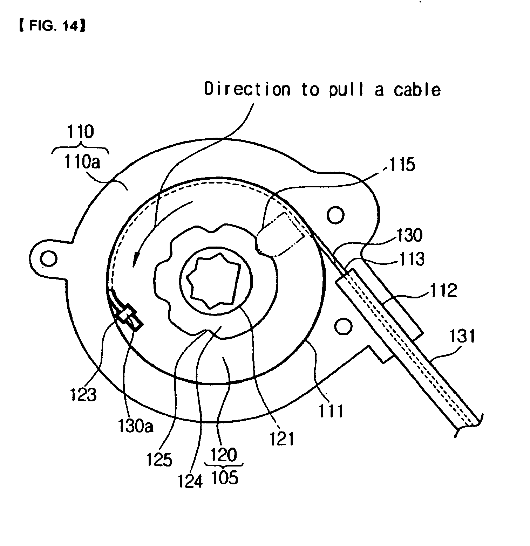

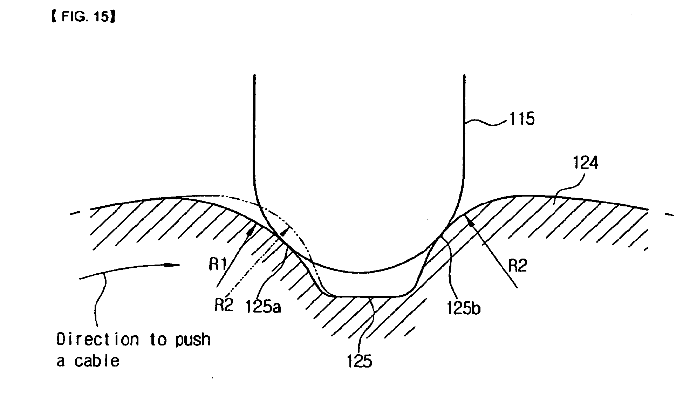

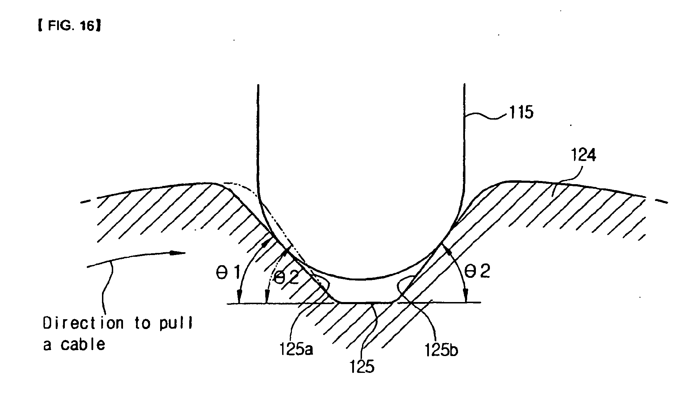

FIGS. 10 to 16 illustrate a cable connecting apparatus of a controller for an air conditioner in a vehicle according to a second preferred embodiment of the present invention, wherein a detent structure is mounted on the cable connecting apparatus 100. That is, FIG. 10 is a perspective view showing a state where the cable connecting apparatus is installed on the air-conditioning case and the controller, FIG. 11 is a sectional view taken along the line of B-B of FIG. 10, FIG. 12 is an exploded perspective view of the cable connecting apparatus, FIGS. 13 and 14 are views showing a state where the pulley is rotated in a direction to push or pull a cable, and FIGS. 15 and 16 are views showing modifications of a detent recess in the cable connecting apparatus.

As shown in the drawings, the detent structure is mounted between the casing 110 and the pulley 120 in such a way that the passenger can feel a suspension sense every specific rotational position when the passenger rotates the knob 80 of the controller 50, so that the passenger can easily manipulate the knob 80.

That is, the casing 110 includes a detent projection 115 elastically mounted inside the casing 110 through an elastic member 115a, and the pulley 120 includes a detent portion 124 protrudingly formed on one side thereof and having a plurality of detent recesses 125 circumferentially formed on an outer face thereof in such a way that the detent projection 115 is elastically caught to one of the detent recesses 125.

In the drawings, the detent portion 124 is formed integrally with the rotary shaft 121 on one side of the pulley 120.

Here, in order to mount the detent projection 115 inside the casing 110, the casing 110 includes a receiving hole 116 formed on an inner face of the second casing 110b and opened in the inward direction. Accordingly, after the elastic member 115a is interposed into the receiving hole 116, the detent projection 115 is elastically mounted.

In this instance, an end portion of the detent projection 115 is in a curved form.

In the meantime, when the knob 80 of the controller 50 is rotated and the pulley 120 is rotated in a direction to pull the cable 130, since the cable 130 is not bent even though it is the flexible cable, there is no loss of cable. However, at least a little loss of the cable occurs due to the property of the flexible cable 130 when the pulley 120 is rotated in a direction to push the cable 130, and hence, a load is increased and the manipulation feeling gets heavy as much as the loss.

When the passenger manipulates and rotates the knob 80 of the controller 50, there is a difference in manipulation force between a case that the passenger rotates the knob 80 in the direction to push the cable 130 and a case that the passenger rotates the knob 80 in the direction to pull the cable 130.

Accordingly, in order to provide the same manipulation feeling and manipulation force without regard to the rotational direction of the knob 80, the present invention achieved it through a change in shape of the detent recesses 125 without adding additional components or changing the structure of the apparatus.

That is, as a plan to provide the same manipulation feeling and manipulation force without regard to the rotational direction of the knob 80, each of the detent recesses 125 is formed left-right asymmetrically in the direction to pull the cable 130 and in the direction to push the cable 130.

In order to form the detent recess 125 left-right asymmetrically, as shown in FIG. 15, out of left and right sides 125a and 125b of the detent recess 125, one side 125a, to which the detent projection 115 is caught when the pulley 120 is rotated in the direction to push the cable 130, has a curved face having a radius (R1) larger than a radius (R2) of the other side 125b.

As another modification, as shown in FIG. 16, out of the left and right sides 125a and 125b of the detent recess 125, one side 125a, to which the detent projection 115 is caught when the pulley 120 is rotated in the direction to push the cable 130, has an inclined face having an angle (θ1) smaller than an angle (θ2) of the other side 125b.

As described above, in order to compensate an increase of the load and the manipulation force due to the loss of the cable occurring when the pulley 120 is rotated in the direction to push the cable 130, one 125a out of the left and right sides 125a and 125b of the detent recess 125 has the curved face having the radius (R1) larger than that of the other side 125b or the inclined face having the angle smaller than that of the other side 125b, so that the pulley 120 can be rotated even by a small manipulation force when the cable 130 is pushed, whereby the present invention can provide the same manipulation feeling and force when the passenger rotates the knob 80 in the direction to push the cable 130 and when the passenger rotates the knob 80 in the direction to pull the cable 130 to thereby enhance the manipulation feeling.

In the meantime, when the pulley 120 is rotated in the direction to pull the cable 130, the detent projection 115 is caught to the curved face having the smaller radius (R2) or the inclined face having the larger angle (θ2), and hence, a moderation feeling is emphasized.

Furthermore, as another plan to provide the same manipulation feeling and manipulation force without regard to the shape of the detent recess 125, while the detent recess 125 is formed left-right symmetrically, the outward appearance of the detent projection 115, which is in correspondence with the detent recess 125, is formed left-right asymmetrically in the direction to pull the cable 130 and in the direction to push the cable 130, whereby the present invention can obtain the same effect as the above plan.

That is, the detent projection 115 may have the right and left sides of the asymmetrically curved face or the asymmetrically inclined face in such a way as to be left-right asymmetric in the direction to pull the cable 130 and in the direction to push the cable 130.

Hereinafter, an action of the cable connecting apparatus of the controller for the air conditioner in the vehicle according to the present invention will be described.

First, when the passenger rotates the knob 80 of the controller 50, the pulley 120 of the connecting apparatus 100 mounted on the controller 50 connected with the knob 80 is also rotated.

The pulley 120 is rotated inside the pulley receiving portion 111 of the casing 110 in interlock with the knob 80.

In this instance, when the pulley 120 mounted on the connecting apparatus 100 of the controller 50 is rotated, the pulley 120 mounted on the connecting apparatus 100 of the air-conditioning case 10 connected through the cable 130 is also rotated in interlock with the pulley 120 of the controller 50.

That is, when one end portion of the cable 130 is wound onto the pulley 120 of the connecting apparatus 100 mounted on the controller 50 to pull the cable 130, the other end portion of the cable 130 is released from the pulley 120 while pulling the pulley 120 of the connecting apparatus 100 mounted on the air-conditioning case 10 in the rotational direction.

On the contrary, when one end portion of the cable is released from the pulley 120 of the connecting apparatus 100 mounted on the controller 50 to push the cable 130, the other end portion of the cable 130 pushes the pulley 120 of the connecting apparatus 100 mounted on the air-conditioning case 10 in the rotational direction to thereby be wound on the pulley 120.

Continuously, when the pulley 120 of the connecting apparatus 100 mounted on the air-conditioning case 10 is rotated, the cam 21 of the air-conditioning case 10 connected and joined to the rotary shaft 121 of the pulley 120 is rotated. When the cam 21 is rotated, the levers 25 are rotated at a predetermined angle while pins 26 of the levers 25 slide along the slots 22 of the cam 21, whereby the arms 28 interlocked with the levers 25 actuate the doors 16.

Moreover, when the pulley 120 is rotated inside the receiving portion 111 of the casing 110 to wind (pull) or release (push) the end portion of the cable 130, since the receiving portion 111 of the casing 110 wrapping the pulley 120 supports one side of the cable 130 drawn out from the tube 131, it can prevent that the cable 130 is bent.

Additionally, when the passenger rotates the knob 80, the plural detent recesses 125 of the pulley 120 are elastically caught to the detent projection 115, and hence, the passenger has the moderation feeling every specific position (every air-conditioning mode zone) when he or she manipulate the knob 80, whereby the passenger can easily manipulate the air-conditioning mode.

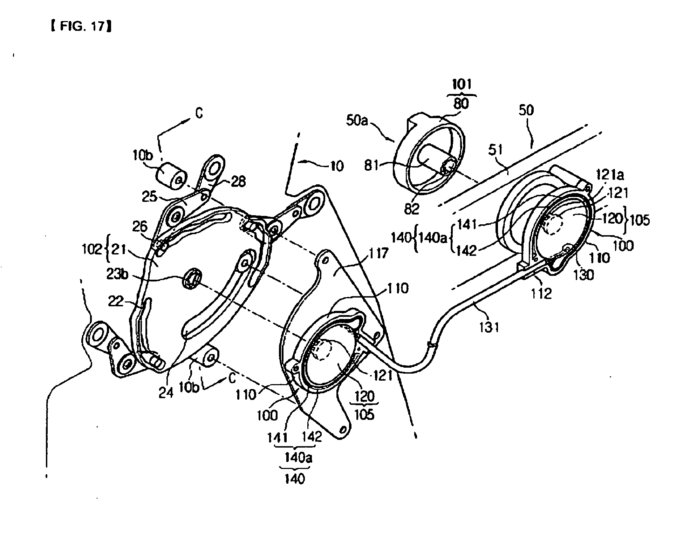

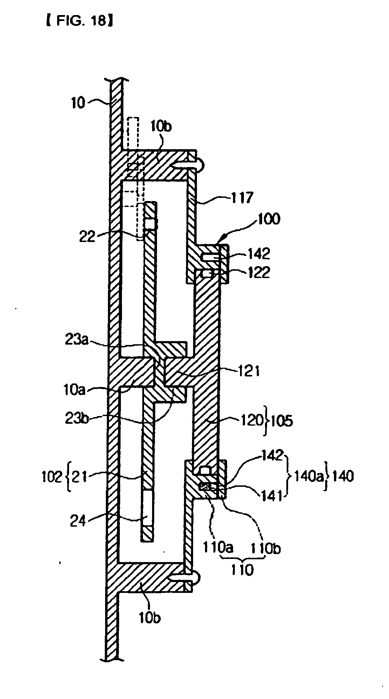

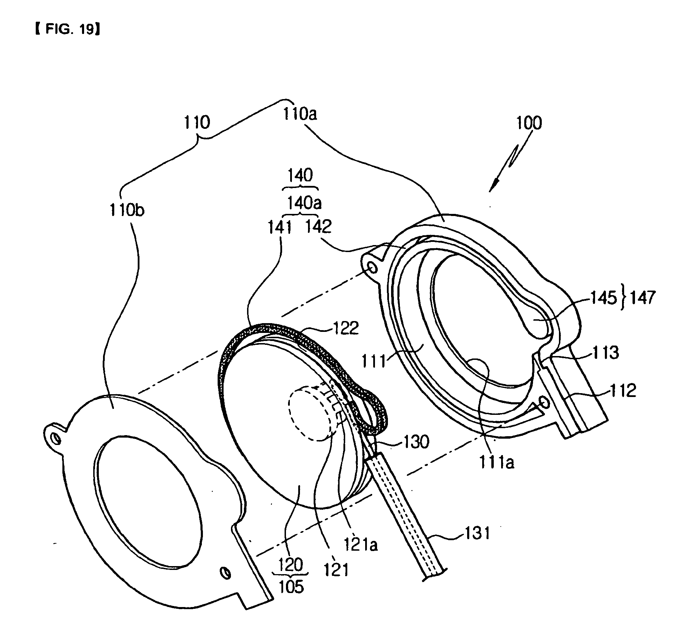

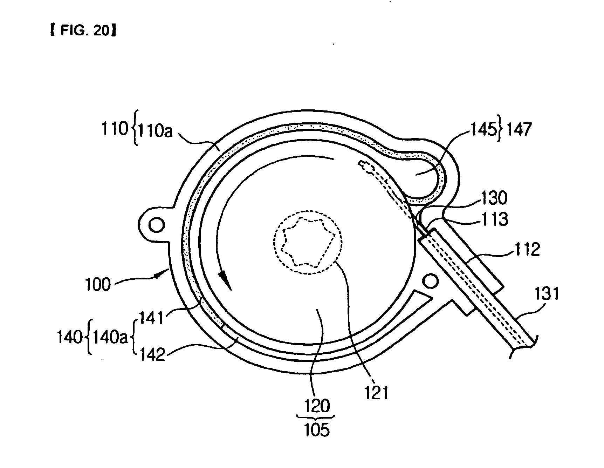

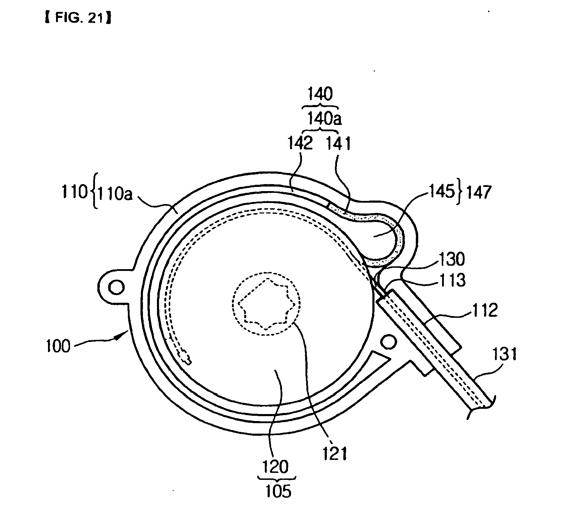

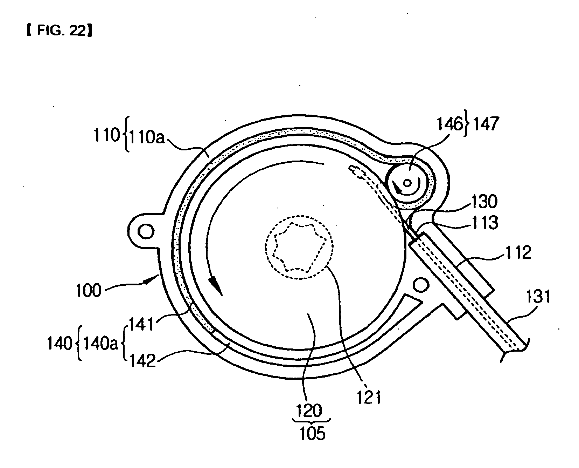

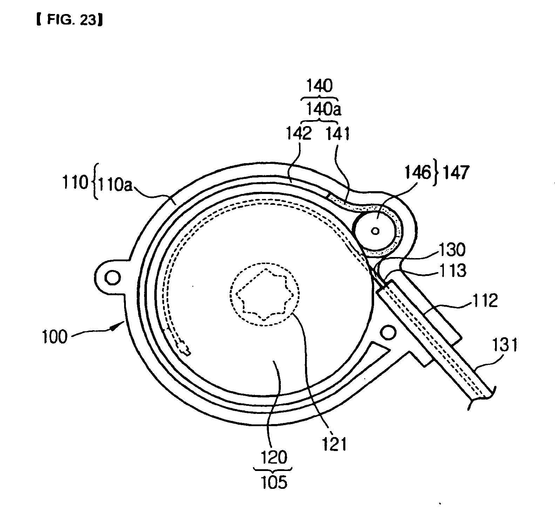

FIGS. 17 to 23 illustrate a cable connecting apparatus of a controller for an air conditioner in a vehicle according to a third preferred embodiment of the present invention, wherein the bending preventing means 140 of the cable connecting apparatus 100 is changed. That is, FIG. 17 is a perspective view showing a state where the cable connecting apparatus is installed on the air-conditioning case and the controller, FIG. 18 is a sectional view taken along the line of C-C of FIG. 17, FIG. 19 is an exploded perspective view of the cable connecting apparatus, FIGS. 20 and 21 are views showing a state where the pulley pulls or winds the cable, and FIGS. 22 and 23 are views showing a state where a boss portion is substituted with a roller.

As shown in the drawings, the bending preventing means 140 includes supporting means 140a for closely supporting the cable 130 drawn out from the tube 131 while moving along the cable 130 when the cable 130 is wound on or released from the pulley 120.

The supporting means 140a includes: a sliding groove 142 formed adjacent to the circumference of the receiving portion 111 inside the casing 110, one end portion of the sliding groove 142 communicating with the receiving portion 111; and a support guide 141 made of an elastic material and slidably inserted into the sliding groove 142, one end portion of the support guide 141 being fixed to the outer circumferential surface of the pulley 120 so that the support guide 141 closely supports the cable 130 while being wound on or released from the outer circumferential surface of the pulley 120 together with the cable 130 when the pulley 120 is rotated.

In addition, it is preferable that one end portion of the support guide 141 is fixed to the inside of the cable groove 122 formed on the outer circumferential surface of the pulley 120, but the end portion of the support guide 141 may be formed integrally with the outer circumferential surface of the pulley 120. Here, the end portion of the support guide 141 is fixed adjacent to a portion of the outer circumferential face of the pulley 120, to which the end portion of the cable 130 is joined.

In the meantime, the support guide 141 is interposed between the cable 130 wound on the cable groove 122 of the pulley 120 and the receiving portion 111 to closely support the cable 130.

Furthermore, a boss portion 145 as a pivot means 147 is formed at a portion, where the sliding groove 142 and the receiving portion 111 are connected with each other, to reduce a radius of the sliding groove 142 and make the support guide 141 take a U-turn and be wound on the pulley 120, whereby the support guide 141 is prevented from a tangle.

Moreover, the support guide 141 is mounted in such a way as to slide in the opposite direction to the rotational direction of the pulley 120 inside the sliding groove 142. That is, the end portion of the support guide 141 takes the U-turn on the outer circumferential surface of the boss portion 145 and is fixed and joined to the outer circumferential surface of the pulley 120, and hence, the support guide 141 inserted into the sliding groove 142 slides in the opposite direction to the rotational direction of the pulley 120.

Additionally, when the pulley 120 is rotated, since the support guide 141 is wound on or released from the outer circumferential surface of the pulley 120 while taking the U-turn along the outer circumferential surface of the boss portion 145, the support guide 141 can be prevented from the tangle.

In the meantime, the present invention can reduce the manufacturing cost since the support guide 141 made of the elastic material can support the cable 130 by using only one string.

In addition, as another preferred embodiment of the pivot means 147, as shown in FIGS. 22 and 23, a roller 146 is formed at a portion, where the sliding groove 142 and the receiving portion 111 are connected with each other, to make the support guide 141 take a U-turn and be wound on the pulley 120, whereby the support guide 141 is prevented from a tangle.

That is, the roller 146 is mounted in place of the boss portion 145 to serve as the boss portion 145. In this instance, if the roller 146 is mounted, when the pulley 120 is rotated, the support guide 141 rotates the roller 146 and takes the U-turn along the outer circumferential surface of the roller 146 to be wound on or released from the outer circumferential surface of the pulley 120, and hence, a friction can be minimized during the above process.

As described above, when the cable 130 drawn out from the tube 131 is wound on or released from the outer circumferential surface of the pulley 120, since the support guide 141 made of the elastic material closely supports the cable 130 while being wound on or released from the pulley 120 together with the cable 130, so that the cable 130 is used as the flexible cable 130 without any restriction in route of the cable 130 and it is prevented that the cable 130 is bent when the cable 130 is wound (pulled) on or released (pushed) from the pulley 120, whereby the loss of the flexible cable 130 can be removed.

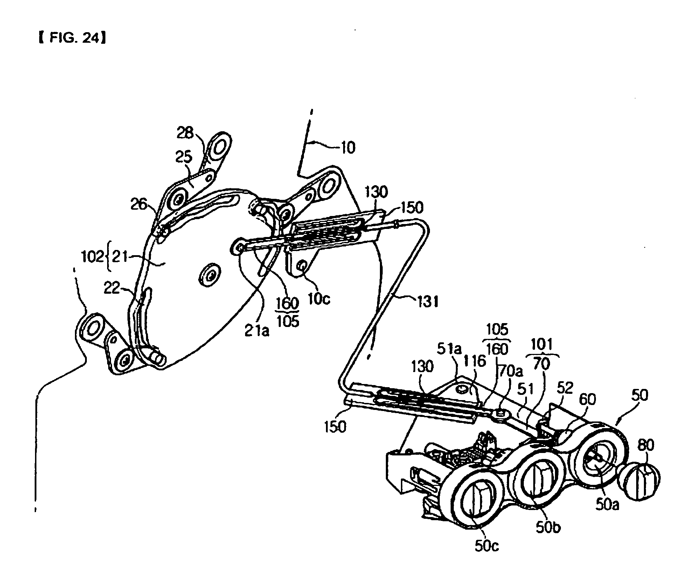

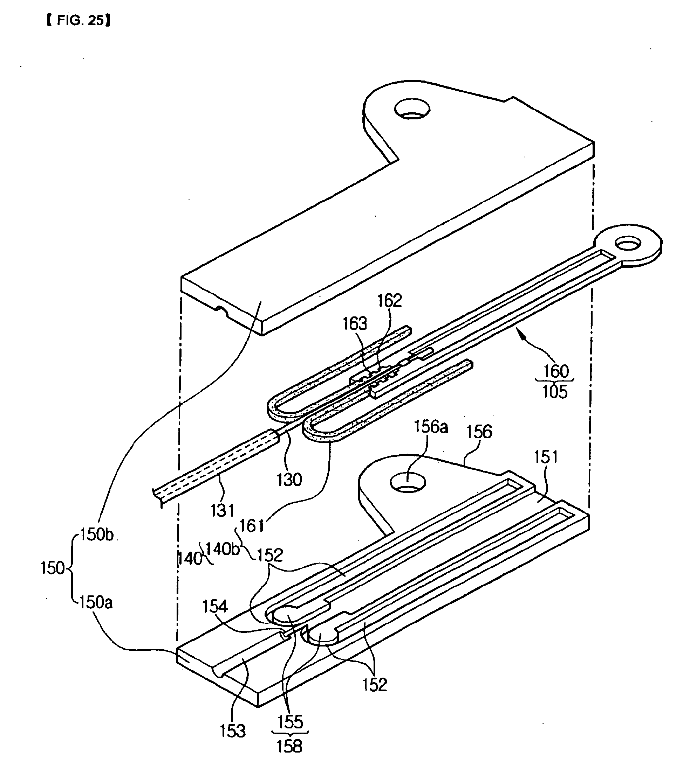

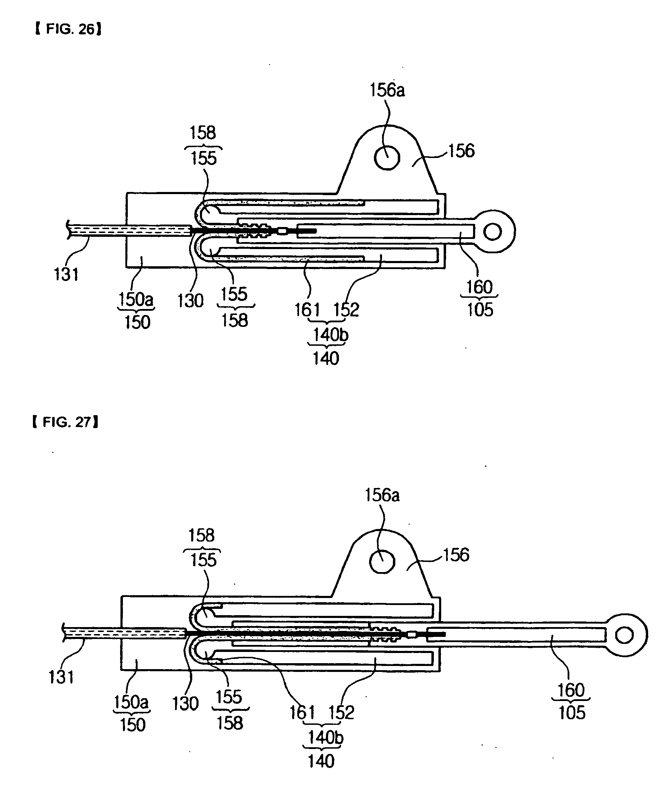

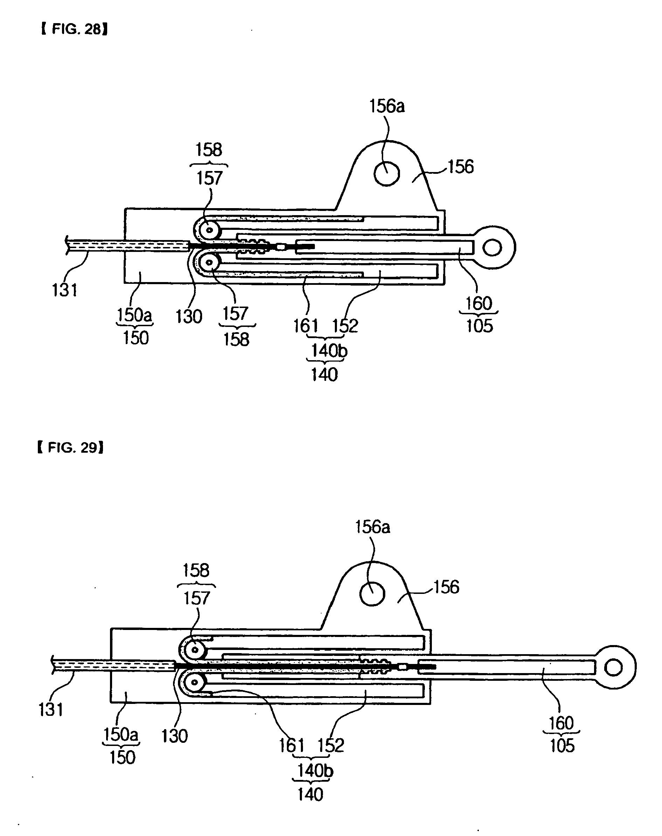

FIGS. 24 to 29 illustrate a cable connecting apparatus of a controller for an air conditioner in a vehicle according to a fourth preferred embodiment of the present invention, wherein the connecting means 105 and the bending preventing means 140 of the cable connecting apparatus 100 are changed. That is, FIG. 24 is a perspective view showing a state where the cable connecting apparatus is installed on the air-conditioning case and the controller, FIG. 25 is an exploded perspective view of the cable connecting apparatus, FIGS. 26 and 27 are views showing a state where a slide bar pushes and pulls the cable, and FIGS. 28 and 29 are views showing a state where a boss portion is substituted with a roller.

The cable connecting apparatus 100 is directly connected to the actuating means 101 of the controller 50, namely, the knob 80 of the switch 50a, in the first to third embodiments, but is connected to a gear lever 70 working in conjunction with the knob 80 when the passenger manipulates the knob 80 of the switch 50a.

Here, the switch 50a having the gear lever 70 will be described. As shown in FIG. 24, the switch 50a includes: a gear shaft 60 having one end portion rotatably supported on a boss 52 protrudingly formed on the inner bottom face of the housing 51 and the other end portion protruding outwardly from the housing 51; the gear lever 70 rotatably joined to the boss 52 and gear-coupled with the gear shaft 60; and the knob 80 joined to an end portion of the gear shaft 60 protruding outwardly from the housing 51.

In this instance, the gear shaft 60 adopts a beveled tooth form and the gear lever 70 corresponding to the gear shaft 60 adopts an arced tooth form.

Moreover, the connecting means 105 is a slide bar 160 back-and-forth slidably inserted into a receiving portion 151, which is formed inside a casing 150 in a straight line. One end portion of the slide bar 160 is fixed to one end portion of the cable 130 and the other end portion is rotatably joined to the actuating means 101 and 102.

Additionally, a receiving portion 151 is formed inside the casing 150 in a straight line in such a way that the slide bar 160 is slidably mounted therein, the bending preventing means 140 is mounted inside the casing 150, and one end portion of the cable 130 is inserted into the receiving portion 151.

In this instance, the casing 150 includes a tube fixing portion 153 formed at an inner end portion thereof in such a way that one end portion of the tube 131 wrapping the cable 130 is fixed thereto in a state where the tube 131 is inserted thereinto to a predetermined length, and the receiving portion 151 is formed at the other inner end portion of the casing 150.

That is, the end portion of the tube 131 is fixed to the end portion of the casing 150 located on the opposite side of the slide bar 160 inside the casing 150, and the slide bar 160 is mounted in a longitudinal direction of the cable 130, which is mounted inside the casing 150.

In the meantime, a cable support groove 154 is formed between the tube fixing portion 153 and the receiving portion 151 to support a portion of the cable 130 drawn out from the tube 131.

Additionally, the casing 150 is rotatably joined to the housing 51 of the controller 50 or the air-conditioning case 10. In this instance, the casing 150 further includes a hinged portion 156 protrudingly formed on one side of one end portion thereof in such a way that the casing 150 can be rotated in correspondence with the position of the actuating means 101 of the controller 50 or the actuating means 102 of the air-conditioning case 10.

That is, since the gear lever 70 connected with the slide bar 160 of the casing 150 or the cam 21 is rotated, also the position of the slide bar 160 or the casing 150 must be varied within a predetermined range according to the varied position of the gear lever 70 or the cam 21.

Accordingly, if the hinged portion 156 is formed at one side of the casing 150, the position of the casing 150 is varied together with the position of the gear lever 70 or the cam 21 through the hinged portion 156 when the position of the gear lever 70 or the cam 21 is varied, whereby a smooth working is achieved.

In the meantime, projection portions 10c 51a are respectively formed on the outer face of the air-conditioning case 10 and the housing 51 of the controller 50, and the hinged portion 156 has a coupling hole 156a for rotatably coupling the projection portions 10c and 51a.

Furthermore, the bending preventing means 140 includes supporting means 140b for closely supporting the cable 130 while moving along the cable 130 when the cable 130 slides back and forth together with the slide bar 160.

The supporting means 140b includes: a sliding groove 152 formed adjacent to the circumference of the receiving portion 151 inside the casing 150, one end portion of the sliding groove 152 communicating with the receiving portion 151; and a support guide 161 made of an elastic material and slidably inserted into the sliding groove 152, one end portion of the support guide 161 being fixed to one end portion of the slide bar 160, the support guide 161 being adapted to closely support a side of the cable 130 while sliding together with the cable 130 when the slide bar 160 performs a sliding action.

A pair of the support guides 161 are fixed and joined to the end portion of the slide bar 160, to which one end portion of the cable 130 is joined, in such a way as to be closely mounted at both sides of the cable 130.

Now, a joining method of the support guide 161 and the slide bar 160 will be described. Each of the support guides 161 has an uneven portion 163 formed at one end portion thereof and the slide bar 160 has an uneven groove 162 formed at one end portion thereof in such a way that the uneven portion 163 of the support guide 161 is inserted and coupled to the uneven groove 162. Alternatively, the end portion of the support guide 161 may be formed integrally with the end portion of the slide bar 160.

Moreover, the support guides 161 have a predetermined length in such a way as to closely support both sides of the cable 130 drawn out from the tube 131 when the slide bar 160 slides.

Additionally, a pair of the sliding grooves 152 formed in such a way that a pair of the support guides 161 are slidably inserted thereinto are formed symmetrically relative to the receiving portion 151. That is, a pair of the sliding grooves 152 are formed parallel adjacent to both sides of the receiving portion 151.

In addition, a boss portion 155 as a pivot means 158 is formed at a portion, where the sliding groove 152 and the receiving portion 151 are connected with each other, to make the support guide 161 take a U-turn and be joined to the slide bar 160, whereby the support guide 161 is prevented from a tangle.

Here, one end portion of the slide groove 152 is formed in a "U"-shape with a predetermined radius by the boss portion 155.

Furthermore, the support guide 161 is mounted in such a way as to move (slide) in the opposite direction to a sliding direction of the slide bar 160. That is, since the end portion of the support guide 161 takes the U-turn at the outer circumferential surface of the boss portion 155 and is fixed to the end portion of the slide bar 160, the support guide 161 inserted into the sliding groove 152 moves (slides) in the opposite direction to the sliding direction of the slide bar 160.

Moreover, since the support guide 161 slides while taking the U-turn in a predetermined radius along the outer circumferential surface of the boss portion 155 when the slide bar 160 slides, it can prevent the tangle of the support guide 161.

In addition, as another preferred embodiment of the pivot means 158, as shown in FIGS. 28 and 29, a roller 157 is formed at a portion, where the sliding groove 152 and the receiving portion 151 are connected with each other, to make the support guide 161 take a U-turn and be joined to the slide bar 160, whereby the support guide 161 is prevented from a tangle.

That is, the roller 157 is mounted in place of the boss portion 155 to serve as the boss portion 155. In this instance, if the roller 157 is mounted, when the slide bar 160 is rotated, the support guide 161 rotates the roller 157 and takes the U-turn along the outer circumferential surface of the roller 157 to thereby slide together with the slide bar 160, and hence, a friction can be minimized during the above process.

In the meantime, the other end portion of the slide bar 160 is rotatably joined to a pin 70a formed on the gear lever 70 or to a pin 21a formed on the cam 21.

Additionally, the casing 150 includes: a first casing 150a having the sliding grooves 152 and the receiving portion 151; and a second casing 150b joined with the first casing 150a and covering the receiving portion 151.

As described above, since the elastic support guide 161 closely supports both sides of the cable 130 drawn out from the tube 131 while sliding together with the cable 130, so that the cable 130 is used as the flexible cable 130 without any restriction in route of the cable 130 and it is prevented that the cable 130 is bent when the cable 130 is pushed, whereby the loss of the flexible cable 130 can be removed.

Hereinafter, an action of the cable connecting apparatus 100 according to the fourth preferred embodiment will be described.

First, when the passenger rotates the knob 80 of the switch 50a of the controller 50, the gear shaft 60 rotates the gear lever 70 at a predetermined angle while rotating.

The gear lever 70 rotating at the predetermined angle pulls or pushes the slide bar 160 from or to the casing 150, whereby the slide bar 160 slides back and forth inside the casing 150.

In this instance, when the slide bar 160 of the casing 150 mounted on the controller 50 performs the back and forth sliding action, also the slide bar 160 of the casing 150 mounted on the air-conditioning case 10, which is connected to the slide bar 160 of the casing 150 of the controller 50 through the cable 130, performs the back and forth sliding action in interlock with the slide bar 160 of the casing 150 of the controller 50.

That is, when the slide bar 160 of the casing 150 mounted on the controller 50 pulls one end portion of the cable 130, the other end portion of the cable 130 pulls the slide bar 160 of the casing 150 mounted on the air-conditioning case 10. On the contrary, when the slide bar 160 of the casing 150 mounted on the controller 50 pushes the one end portion of the cable 130, the other end portion of the cable 130 pushes the slide bar 160 of the casing 150 mounted on the air-conditioning case 10.

Continuously, when the slide bar 160 of the casing 150 mounted on the air-conditioning case 10 performs the back and forth sliding action, the cam 21 of the air-conditioning case 10 connected with the slide bar 160 is rotated. When the cam 21 is rotated, while the pins 26 of the levers 25 slide along the slots 22 of the cam 21, the levers 25 are rotated at a predetermined angle, and then, the arms 28 interlocked with the levers 25 actuate the doors 16.

Furthermore, when the slide bar 160 pulls or pushes the end portion of the cable 130 while performing the back and forth sliding action inside the casing 150, also the support guides 161 joined to the slide bar 160 slide together with the cable 130 and closely support both sides of the cable 130 drawn out from the tube 131, and thence, the cable 130 is prevented from being bent.

While the present invention has been described with reference to the particular illustrative embodiments, it is not to be restricted by the embodiments but only by the appended claims. It is to be appreciated that those skilled in the art can change or modify the embodiments without departing from the scope of the present invention.

## Claims

1. A cable connecting apparatus for connecting actuating means (101) of a controller (50) for an air conditioner for a vehicle,
and actuating means (102) of an air-conditioning case (10) with a single cable (130) to thereby actuate doors mounted inside the air-conditioning case (10), the cable connecting apparatus comprising:
a casing (110; 150) having a receiving portion (111; 151) formed therein in such a way that one end portion of the cable (130) is inserted into the receiving portion (111; 151) at one side thereof;
connecting means (105) movably inserted into the receiving portion (111; 151) of the casing (110; 150) for connecting the one end portion of the cable (130) and one of the actuating means (101; 102) with each other; and
bending preventing means (140) disposed on the connecting means (105) to prevent the cable (130) inserted into the receiving portion (111; 151) from bending by the manipulation force so that the manipulation force can be transferred between the actuating means (101)(102);
wherein the connecting means (105) is a pulley (120) rotatably inserted and mounted into the receiving portion (111) formed circularly inside the casing (110), and wherein one end portion of the cable (130) is joined to the outer circumferential surface of the pulley (120) in such a way as to be circumscribed with the pulley (120) and the pulley (120) comprises a rotary shaft (121) formed on the center of one side thereof in such a way as to be joined with the actuating means (101; 102);
**characterized in that** the casing (110) comprises a detent projection (115) elastically mounted inside the casing (110) through an elastic member (115a), and the pulley (120) comprises a detent portion (124) protrudingly formed on one side thereof, the detent portion (124) having a plurality of detent recesses (125) circumferentially formed on an outer face thereof in such a way that the detent projection (115) is elastically caught to the detent recesses (125); and
**in that** at least one of the detent recesses (125) and the detent projection (115) is formed left-right asymmetrically in a direction to pull the cable (130) and in a direction to push the cable (130).

2. The cable connecting apparatus according to claim 1, wherein the bending preventing means (140) comprises a cable groove (122) with a non-circular section and the cable (130) with a circular section to minimize a contact resistance to the cable (130) when the cable (130) is wound on the outer circumferential surface of the pulley (120).

3. The cable connecting apparatus according to claim 2, wherein the cable groove (122) includes chamfered portions (122a) formed at an opening portion thereof to thereby allow a smooth entry of the cable (130).

4. The cable connecting apparatus according to claim 2, wherein a depth (D) of the cable groove (122) is the same as a diameter size of the cable (130).

5. The cable connecting apparatus according to claim 2, wherein a gap (G) of a predetermined interval is formed between the inner circumferential surface of the receiving portion (111) of the casing (110) and the outer circumferential surface of the pulley (120), so that the receiving portion (111) can support one side of the cable (130) without bending of the cable.

6. The cable connecting apparatus according to claim 1, wherein the casing (110; 150) comprises: a tube joining portion (112; 153) formed on one side of the casing (110) in such a way that one end portion of the tube (131) wrapping the cable (130) can be fixed thereto; and
a cable support groove (113; 154) formed between the tube joining portion (112; 153) and the receiving portion (111; 151) for supporting the cable (130) drawn out from the tube (131).

7. The cable connecting apparatus according to claim 1, wherein the casing (110) further comprises brackets (117) in such a way as to be fixed to the air-conditioning case (10) and the rotary shaft (121) of the pulley (120) is located at the rotational center of the actuating means (102) of the air-conditioning case (10).

8. The cable connecting apparatus according to claim 1, wherein the casing (110) is fixed to the rear side of the housing (51) of the controller (50) and the rotary shaft (121) of the pulley (120) is located at the rotational center of the actuating means (101) of the controller (50).

9. The cable connecting apparatus according to claim 1, wherein the bending preventing means (140) comprises supporting means (140a) for closely supporting the cable (130) drawn out from the tube (131) while moving along the cable (130) when the cable (130) is wound on or released from the pulley (120) wherein the supporting means (140a) comprises:
a sliding groove (142) formed adjacent to the circumference of the receiving portion (111), one end portion of the sliding groove (142) communicating with the receiving portion (111); and
a support guide (141) slidably inserted into the sliding groove (142), one end portion of the support guide (141) being fixed to the outer circumferential surface of the pulley (120) so that the support guide (141) closely supports the cable (130) while being wound on or released from the outer circumferential surface of the pulley (120) together with the cable (130) when the pulley (120) is rotated.

10. The cable connecting apparatus according to claim 9, wherein the support guide (141) is mounted in such a way as to slide in the opposite direction to a rotational direction of the pulley (120).

11. The cable connecting apparatus according to claim 9, wherein a pivot means (147) is formed at a portion, where the sliding groove (142) and the receiving portion (111) are connected with each other, to make the support guide (141) take a U-turn and be wound on the pulley (120), so that the support guide (141) is prevented from a tangle.

12. The cable connecting apparatus according to claim 9, wherein the cable groove (122) with a non-circular section is formed on the outer circumferential surface of the pulley (120) in such a way that the cable (130) with a circular section is wound thereon, and the support guide (141) is interposed between the cable (130) wound on the cable groove (122) of the pulley (120) and the receiving portion (111) to closely support the cable (130).

## Patentansprüche

1. Zugverbindungsvorrichtung zum Verbinden von Betätigungsmitteln (101) eines Reglers (50) für eine Klimaanlage für ein Fahrzeug und Betätigungsmitteln (102) eines Klimatisiergehäuses (10) mit einem Einzelzug (130), um **dadurch** Klappen zu betätigen, die innerhalb des Klimatisiergehäuses (10) angebracht sind, wobei die Zugverbindungsvorrichtung umfasst:
ein Gehäuse (110; 150), das einen Aufnahmeabschnitt (111; 151) aufweist, der darin in derartiger Weise gebildet ist, dass ein Endabschnitt des Zuges (130) in den Aufnahmeabschnitt (111; 151) an einer Seite desselben eingefügt ist;
Verbindungsmittel (105), die beweglich in den Aufnahmeabschnitt (111; 151) des Gehäuses (110; 150) eingefügt sind, um den einen Endabschnitt des Zuges (130) und eines der Betätigungsmittel (101; 102) miteinander zu verbinden; und
Biegeschutzmittel (140) die auf den Verbindungsmitteln (105) angeordnet sind, um der Zug (130), der in den Aufnahmeabschnitt (111; 151) eingefügt ist, durch die Handhabungskraft vor Biegung zu schützen, sodass die Handhabungskraft zwischen den Betätigungsmitteln (101)(102) übertragen werden kann;
wobei die Verbindungsmittel (105) eine Rillenscheibe (120) sind, die drehbar im Aufnahmeabschnitt (111), der kreisförmig innerhalb des Gehäuses (110) gebildet ist, eingefügt und angebracht ist, und wobei ein Endabschnitt des Zuges (130) mit der Außenumfangsoberfläche der Rillenscheibe (120) in derartiger Weise verbunden ist, dass er die Rillenscheibe (120) umfängt, und die Rillenscheibe (120) eine Drehwelle (121) umfasst, die auf der Mitte einer Seite derselben in derartiger Weise gebildet ist, dass sie mit den Betätigungsmitteln (101; 102) verbunden ist;
**dadurch gekennzeichnet, dass** das Gehäuse (110) einen Rastvorsprung (115) umfasst, der elastisch innerhalb des Gehäuses (110) über ein elastisches Element (115a) angebracht ist, und die Rillenscheibe (120) einen Rastabschnitt (124) umfasst, der vorstehend auf einer Seite derselben gebildet ist, wobei der Rastabschnitt (124) mehrere Rastvertiefungen (125) aufweist, die auf einer Außenfläche desselben auf dem Umfang in derartiger Weise gebildet sind, dass der Rastvorsprung (115) elastisch in den Rastvertiefungen (125) gefangen ist; und
**dadurch**, dass mindestens eines von den Rastvertiefungen (125) und dem Rastvorsprung (115) links-rechts asymmetrisch in einer Richtung zum Ziehen des Zuges (130) und in einer Richtung zum Drücken des Zuges (130) gebildet ist.

2. Zugverbindungsvorrichtung nach Anspruch 1, wobei die Biegeschutzmittel (140) eine Zugnut (122) mit einem nicht kreisförmigen Querschnitt und den Zug (130) mit einem kreisförmigen Querschnitt umfassen, um einen Berührwiderstand zum Zug (130) zu minimieren, wenn der Zug (130) auf die Außenumfangsoberfläche der Rillenscheibe (120) gewickelt ist.

3. Zugverbindungsvorrichtung nach Anspruch 2, wobei die Zugnut (122) angefaste Abschnitte (122a) beinhaltet, die an einem Öffnungsabschnitt derselben gebildet sind, um **dadurch** einen gleichmäßigen Eintritt des Zuges (130) zu ermöglichen.

4. Zugverbindungsvorrichtung nach Anspruch 2, wobei eine Tiefe (D) der Zugnut (122) dieselbe wie eine Durchmessergröße des Zuges (130) ist.

5. Zugverbindungsvorrichtung nach Anspruch 2, wobei ein Spalt (G) eines vorgegebenen Zwischenraumes zwischen der Innenumfangsoberfläche des Aufhahmeabschnitts (111) des Gehäuses (110) und der Außenumfangsoberfläche der Rillenscheibe (120) gebildet ist, sodass der Aufnahmeabschnitt (111) eine Seite des Zuges (130) stützen kann, ohne dass der Zug gebogen wird.

6. Zugverbindungsvorrichtung nach Anspruch 1, wobei das Gehäuse (110; 150) umfasst: einen Schlauchverbindungsabschnitt (112; 153), der auf einer Seite des Gehäuses (110) in derartiger Weise gebildet ist, dass ein Endabschnitt des Schlauches (131), der den Zug (130) umwickelt, daran fixiert werden kann; und
eine Zugstütztnut (113; 154), die zwischen dem Schlauchverbindungsabschnitt (112; 153) und dem Aufnahmeabschnitt (111; 151) gebildet ist, um den Zug (130) zu stützen, der aus dem Schlauch (131) gezogen ist.

7. Zugverbindungsvorrichtung nach Anspruch 1, wobei das Gehäuse (110) ferner Halter (117) in derartiger Weise umfasst, dass sie am Klimatisiergehäuse (10) fixiert sind und die Drehwelle (121) der Rillenscheibe (120) sich im Drehzentrum der Betätigungsmittel (102) des Klimatisiergehäuses (10) befindet.

8. Zugverbindungsvorrichtung nach Anspruch 1, wobei das Gehäuse (110) an der Rückseite des Gehäuses (51) des Reglers (50) fixiert ist und die Drehwelle (121) der Rillenscheibe (120) sich im Drehzentrum der Betätigungsmittel (101) der Steuerung (50) befindet.

9. Zugverbindungsvorrichtung nach Anspruch 1, wobei die Biegeschutzmittel (140) Stützmittel (140a) umfassen, um den Zug (130) dicht zu stützen, der aus dem Schlauch (131) gezogen ist, während der Zug (130) entlangbewegt wird, wenn der Zug (130) auf die Rillenscheibe (120) auf- oder von ihr abgewickelt wird, wobei die Stützmittel (140a) umfassen:
eine Gleitnut (142) die dem Umfang des Aufnahmeabschnitts (111) benachbart gebildet ist, wobei ein Endabschnitt der Gleitnut (142) mit dem Aufnahmeabschnitt (111) in Verbindung steht; und
eine Stützführung (141), die gleitend in die Gleitnut (142) eingefügt ist, wobei ein Endabschnitt der Stützführung (141) an der Außenumfangsoberfläche der Rillenscheibe (120) fixiert ist, sodass die Stützführung (141) den Zug (130) dicht stützt, während sie gemeinsam mit dem Zug (130) auf die Außenumfangsoberfläche der Rillenscheibe (120) auf- oder von ihr abgewickelt wird, wenn die Rillenscheibe (120) gedreht wird.

10. Zugverbindungsvorrichtung nach Anspruch 9, wobei die Stützführung (141) in derartiger Weise angebracht ist, dass sie in entgegengesetzter Richtung zu einer Drehrichtung der Rillenscheibe (120) gleitet.

11. Zugverbindungsvorrichtung nach Anspruch 9, wobei an einem Abschnitt ein Schwenkmittel (147) gebildet ist, wo die Gleitnut (142) und der Aufnahmeabschnitt (111) miteinander verbunden sind, um zu erreichen, dass die Stützführung (141) eine Kehrtwendung macht und auf die Rillenscheibe (120) gewickelt ist, sodass die Stützführung (141) vor Verwirren geschützt ist.

12. Zugverbindungsvorrichtung nach Anspruch 9, wobei die Zugnut (122) mit einem nicht kreisförmigen Querschnitt auf der Außenumfangsoberfläche der Rillenscheibe (120) in derartiger Weise gebildet ist, dass der Zug (130) mit einem kreisförmigen Querschnitt darauf gewickelt ist und die Stützführung (141) zwischen dem Zug (130), der auf die Zugnut (122) der Rillenscheibe (120) gewickelt ist, und den Aufnahmeabschnitt (111) eingefügt ist, um den Zug (130) dicht zu stützen.

## Revendications

1. Un dispositif de raccordement de câble pour raccorder des moyens d'actionnement (101) d'un contrôleur (50) pour un climatiseur pour un véhicule, et des moyens d'actionnement (102) d'un boîtier de climatiseur (10) avec un seul câble (130) pour ainsi actionner des portes montées dans le boîtier de climatiseur (10), le dispositif de raccordement de câble comprenant:
une enveloppe (110; 150) ayant une partie réceptrice (111; 151) formée en son sein de façon à ce qu'une partie d'extrémité du câble (130) soit insérée dans la partie réceptrice (111; 151) d'un côté de celle-ci;
des moyens de raccordement (105) insérés de façon mobile dans la partie réceptrice (111; 151) de l'enveloppe (110; 150) pour raccorder ladite une partie d'extrémité du câble (130) et l'un des moyens d'actionnement (101; 102) l'un avec l'autre, et
des moyens pour prévenir la flexion (140) disposés sur les moyens de raccordement (105) pour prévenir que le câble (130) inséré dans la partie réceptrice (111; 151) ne se plie sous l'effet de la force de manipulation de sorte que la force de manipulation puisse être transférée entre les moyens d'actionnement (101) (102);
dans lequel les moyens de raccordement (105) sont une poulie (120) montée et insérée de façon rotative dans la partie réceptrice (111) formée de façon circulaire à l'intérieur de l'enveloppe (110), et dans lequel une partie d'extrémité du câble (130) est reliée à la surface circonférentielle extérieure de la poulie (120) de façon à être circonscrite avec la poulie (120), et la poulie (120) comprend un arbre rotatif (121) formé au niveau du centre d'un côté de celle-ci de façon à être reliée aux moyens d'actionnement (101; 102);
**caractérisé en ce que** l'enveloppe (110) comprend une saillie de retenue (115) élastiquement montée à l'intérieur de l'enveloppe (110) au travers d'un élément élastique (115a), et la poulie (120) comprend une partie de retenue (124) formée en saillie sur un côté de celle-ci, la partie de retenue (124) ayant une pluralité de cavités de retenue (125) formées de façon circonférentielle sur une face externe de celle-ci de façon à ce que la saillie de retenue (115) soit prise élastiquement dans les cavités de retenue (125), et
**en ce qu'**au moins l'une des cavités de retenue (125) et la saillie de retenue (115) est formée de façon asymétrique de gauche à droite dans une direction permettant de tirer le câble (130) et une direction permettant de pousser le câble (130).

2. Dispositif de raccordement de câble selon la revendication 1, dans lequel les moyens pour prévenir la flexion (140) comprennent une gorge pour le câble (122) avec une section non-circulaire et le câble (130) avec une section circulaire permettant de minimiser une résistance de contact au niveau du câble (130) lorsque le câble (130) est enroulé sur la surface circonférentielle externe de la poulie (120).

3. Dispositif de raccordement de câble selon la revendication 2, dans lequel la gorge de câble (122) comprend des parties chanfreinées (122a) formées sur une partie d'embouchure de celui-ci pour permettre une entrée en douceur du câble (130).

4. Dispositif de raccordement de câble selon la revendication 2, dans lequel une profondeur (D) de la gorge pour câble (122) est la même qu'une dimension diamétrale du câble (130).

5. Dispositif de raccordement de câble selon la revendication 2, dans lequel un espace (G) d'un intervalle prédéterminé est formé entre la surface circonférentielle interne de la partie réceptrice (111) de l'enveloppe (110) et la surface circonférentielle externe de la poulie (120), de sorte que la partie réceptrice (111) peut supporter un côté du câble (130) sans pliage du câble.

6. Dispositif de raccordement de câble selon la revendication 1, dans lequel l'enveloppe (110; 150) comprend: une partie de réunion de tube (112; 153) formée sur un côté de l'enveloppe (110) de façon à ce qu'une partie d'extrémité du tube (131) enveloppant le câble (130) puisse être fixée à celui-ci, et
une gorge de support de câble (113; 154) formée entre la partie de réunion de tube (112; 153) et la partie réceptrice (111; 151) pour soutenir le câble (130) tiré hors du tube (131).

7. Dispositif de raccordement de câble selon la revendication 1, dans lequel l'enveloppe (110) comprend en outre des supports (117) de façon à être fixée sur le boîtier de climatiseur (10) et l'axe de rotation (121) de la poulie (120) est situé au centre de rotation des moyens d'actionnement (102) du boîtier de climatiseur (10).

8. Dispositif de raccordement de câble selon la revendication 1, dans lequel l'enveloppe (110) est fixée sur le côté arrière du boîtier (51) du contrôleur (50) et l'axe de rotation (121) de la poulie (120) est situé au centre de rotation des moyens d'actionnement (101) du contrôleur (50).

9. Dispositif de raccordement de câble selon la revendication 1, dans lequel les moyens pour prévenir la flexion (140) comprennent des moyens de support (140a) pour supporter de façon rapprochée le câble (130) tiré hors du tube (131) tout en se déplaçant le long du câble (130) lorsque le câble (130) est enroulé sur ou déroulé de la poulie (120) dans lequel les moyens de support (140a) comprennent :
un canal de coulissement (142) formé à proximité de la circonférence de la partie réceptrice (111), une partie d'extrémité du canal de coulissement (142) communiquant avec la partie réceptrice (111), et
un guide de soutien (141) inséré de façon coulissante dans la gorge de coulissement (142), une partie d'extrémité du guide de soutien (141) étant fixée à la surface circonférentielle externe de la poulie (120) de sorte que le guide de soutien (141) soutient de façon rapprochée le câble (130) tout en étant enroulé sur, ou déroulé de, la surface circonférentielle externe de la poulie (120) avec le câble (130) lorsque la poulie (120) est mise en rotation.

10. Dispositif de raccordement de câble selon la revendication 9, dans lequel le guide de soutien (141) est monté de façon à coulisser dans la direction opposée à un sens de rotation de la poulie (120).

11. Dispositif de raccordement de câble selon la revendication 9, dans lequel un moyen de pivotement (147) est formé dans une partie au niveau de laquelle la gorge de coulissement (142) et la partie réceptrice (111) sont connectées l'une à l'autre, pour obliger le guide de soutien (141) à faire demi-tour et à être enroulé sur la poulie (120), de sorte que le guide de soutien (141) soit prévenu d'un enchevêtrement.

12. Dispositif de raccordement de câble selon la revendication 9, dans lequel la gorge pour le câble (122) avec une section non-circulaire est formée sur la surface circonférentielle externe de la poulie (120) de façon à ce que le câble (130) avec une section circulaire s'y enroule, et le guide de soutien (141) est intercalé entre le câble (130) enroulé sur la gorge pour le câble (122) de la poulie (120) et la partie réceptrice (111) pour supporter de façon rapprochée le câble (130).
